# EUROPEAN PATENT APPLICATION

(11) **EP 4 691 841 A1**
(43) Date of publication of application: **11.02.2026**
(21) Application number: 23929501.7
(22) Date of filing: 31.03.2023
(51) Int. Cl.: B60L 58/12, H02J 7/00

(54) **BATTERY CHARGING METHOD AND DEVICE**

(71) Applicant: Shenzhen Yinwang Intelligent Technologies Co., Ltd., Shenzhen, Guangdong 518110 (CN)
(72) Inventor: YANG, Lili, Shenzhen, Guangdong 518129 (CN); DING, Peng, Shenzhen, Guangdong 518129 (CN); YI, Qing, Shenzhen, Guangdong 518129 (CN)
(74) Representative: Thun, Clemens
(86) International application number: PCT/CN2023/085745
(87) International publication number: WO 2024/197918

(57) **Abstract**

This application provides a battery charging method and apparatus, which are applied to the field of battery technologies, to resolve problems of a low battery charging speed and long charging time. The method includes: obtaining a temperature of a battery and an initial state of charge SOC of the battery at a charging start moment; determining, based on the temperature and the initial SOC of the battery at the charging start moment, a target charging map from a plurality of preconfigured charging maps, where the charging map indicates charging rates of the battery that correspond to different temperatures and different SOCs, the target charging map meets a preset condition, and the preset condition includes at least one of the following: a charging rate corresponding to the temperature and the initial SOC of the battery at the charging start moment is the highest in the target charging map of the plurality of preconfigured charging maps; or an average value of charging rates corresponding to the temperature of the battery at the charging start moment, and an SOC range in which the initial SOC is located is the largest in the target charging map of the plurality of preconfigured charging maps; and performing charging based on the target charging map. This application is applied to a battery charging process.

## Description

### TECHNICAL FIELD

This application relates to the field of battery technologies, and in particular, to a battery charging method and apparatus.

### BACKGROUND

A charging rate of a battery affects a charging speed of the battery. The charging rate is mainly obtained based on a state of charge (state of charge, SOC) of the battery and a temperature of the battery by querying a correspondence (which may also be described as a charging map) among the temperature, the state of charge, and the charging rate of the battery. Charging a battery at a high charging rate can accelerate a charging speed of the battery and shorten charging time. However, an existing charging strategy is not optimal enough, resulting in a slow battery charging speed and long charging time.

### SUMMARY

Embodiments of this application provide a battery charging method and apparatus, to improve a battery charging speed and shorten charging time.

To achieve the foregoing objectives, embodiments of this application provide the following technical solutions.

According to a first aspect, an embodiment of this application provides a battery charging method. The method includes: obtaining a temperature of a battery and an initial state of charge SOC of the battery at a charging start moment; determining a target charging map from a plurality of preconfigured charging maps based on the temperature and the initial SOC of the battery at the charging start moment; and performing charging based on the target charging map.

In this way, during battery charging, the matched target charging map is quickly determined from the plurality of preconfigured charging maps based on the temperature of the battery and the state of charge of the battery at the charging start moment, and charging is performed based on the target charging map, thereby improving a charging speed of the battery and shortening charging time of the battery.

According to the first aspect, the target charging map meets a preset condition.

In some examples, the preset condition includes at least one of the following: the charging rate corresponding to the temperature and the initial SOC of the battery at the charging start moment is the highest in the target charging map of the plurality of preconfigured charging maps; or an average value of the charging rates corresponding to the temperature of the battery at the charging start moment and an SOC range in which the initial SOC is located is the largest in the target charging map of the plurality of preconfigured charging maps.

According to any one of the first aspect or the implementations of the first aspect, the charging map indicates charging rates of the battery that correspond to different temperatures and different SOCs.

In some examples, the charging rate is a highest charging rate, that is, a highest value that can be reached by the charging rate when the battery is charged at a temperature and in a state of charge.

In some examples, charging rates corresponding to a same temperature and a same SOC are the same or different in different charging maps.

In this way, during battery charging, the matched target charging map is determined based on the temperature and the state of charge of the battery at the charging start moment, and charging is performed based on a highest charging rate in the target charging map, thereby greatly improving the charging speed.

In some examples, when the battery is charged, the temperature of the battery at the charging start moment is obtained via a temperature sensor.

In some examples, when the battery is charged, the initial state of charge of the battery at the charging start moment is obtained through calculation based on a state of charge prediction algorithm.

In some examples, when the battery is charged, an initial voltage of the battery at the charging start moment is obtained, and the initial state of charge corresponding to the initial voltage is determined based on a correspondence between a voltage and a state of charge.

According to any one of the first aspect or the implementations of the first aspect, before obtaining the temperature of the battery and the state of charge SOC of the battery at the charging start moment, the method further includes: determining a plurality of temperature values, and separately setting a plurality of charging rates for a plurality of first states of charge corresponding to each temperature value, to obtain a plurality of charging maps.

In some examples, the plurality of temperature values are common temperature values obtained based on an experiment.

In some examples, in a safe temperature range of the battery, the safe temperature range of the battery is divided into a plurality of temperature zones in advance, and boundary temperatures of the temperature zones are determined as to-be-selected temperature values.

According to any one of the first aspect or the implementations of the first aspect, the first states of charge may be all or a part of states of charge that are determined in advance from all states of charge of the battery.

In some examples, states of charge of the battery are determined as the first states of charge.

In some examples, a part of states of charge are determined as the first states of charge based on historical data or experience, or a part of states of charge are determined as the first states of charge based on parameter information of the battery; or the states of charge of the battery are divided into a plurality of state of charge ranges, and boundary states of charge of the state of charge ranges are determined as the first states of charge.

According to any one of the first aspect or the implementations of the first aspect, charging rates corresponding to each first state of charge at a specific temperature may be obtained through calculation by using an experiment.

In some examples, the charging rates are determined by using a three-electrode testing method. The plurality of specified charging rates need to meet constraints such as "lithium plating-free" and "minimum charge time".

In this way, the plurality of charging maps may be obtained through preconfiguration based on the temperature values and the first states of charge that are determined in different manners, so that a target charging map that better matches the temperature of the battery and the state of charge of the battery at the charging start moment can be determined for charging. In addition, in different charging scenarios, the battery may be efficiently charged based on different charging maps.

According to any one of the first aspect or the implementations of the first aspect, determining, based on the temperature and the SOC of the battery at the charging start moment, the target charging map from the plurality of preconfigured charging maps includes: determining, in each charging map, a charging rate corresponding to the temperature and the initial SOC of the battery at the charging start moment; and determining, from a plurality of charging rates corresponding to the plurality of charging maps, a charging map with a highest charging rate as the target charging map.

According to any one of the first aspect or the implementations of the first aspect, determining, based on the temperature and the SOC of the battery at the charging start moment, the target charging map from the plurality of preconfigured charging maps further includes: determining, based on the temperature of the battery at the charging start moment, whether a plurality of charging maps corresponding to the temperature exist in the plurality of charging maps; and if the plurality of charging maps exist, determining, based on the state of charge of the battery at the charging start moment, a charging map with a higher charging rate from the plurality of charging maps corresponding to the temperature as the target charging map; or if the charging maps corresponding to the temperature do not exist, determining a target temperature that matches the temperature of the battery at the charging start moment; and determining, based on the state of charge of the battery at the charging start moment, a charging map with a higher charging rate from the plurality of charging maps corresponding to the target temperature as the target charging map.

According to any one of the first aspect or the implementations of the first aspect, determining, based on the temperature and the SOC of the battery at the charging start moment, the target charging map from the plurality of preconfigured charging maps includes: determining, based on the temperature of the battery at the charging start moment, a charging map with a largest average value of charging rates corresponding to an SOC range in which the initial state of charge of the battery is located as the target charging map.

According to any one of the first aspect or the implementations of the first aspect, a manner of determining an average value of charging rates corresponding to a SOC range includes performing integration calculation based on a length of the SOC range and the plurality of preconfigured charging maps, to determine the average value of the charging rates corresponding to the SOC range in each charging map; or determining, based on a plurality of charging rates in the SOC range in each charging map, the average value of the charging rates corresponding to the SOC range in each charging map.

According to any one of the first aspect or the implementations of the first aspect, after obtaining the plurality of charging maps, the method further includes: for a temperature, determining a plurality of calibrated SOC ranges based on the plurality of charging maps, where the calibrated SOC ranges indicate the plurality of SOC ranges corresponding to the same temperature; and determining, from the plurality of charging maps, a charging map corresponding to each calibrated SOC range at the same temperature.

In some examples, after the plurality of charging maps are obtained, for a same temperature, second states of charge are determined based on the plurality of charging maps; a calibrated SOC range is determined based on the second states of charge; and a charging map corresponding to each calibrated SOC range is determined at the temperature.

In some examples, the second states of charge are states of charge corresponding to a maximum value and same values of a plurality of charging rates in the plurality of charging maps at the same temperature.

In some examples, after the second state of charge is determined, states of charge of the battery are divided into a plurality of calibrated SOC ranges by using the second state of charge as a delimiter point. For a calibrated SOC range, if charging rates corresponding to the calibrated range in the plurality of charging maps are the same, a charging map with higher charging rates corresponding to an adjacent calibrated range after the calibrated range is determined as a charging map corresponding to the calibrated range. If the charging rates corresponding to the calibrated range in the plurality of charging maps are different, a charging map with higher charging rates corresponding to the calibrated range is determined as the charging map corresponding to the calibrated range.

In some examples, based on consideration of an overall charging speed and battery safety, the states of charge of the battery are divided into a plurality of calibrated SOC ranges by using some second states of charge as delimiter points.

According to any one of the first aspect or the implementations of the first aspect, determining the target charging map from the plurality of preconfigured charging maps based on the plurality of charging maps in the calibrated SOC range and the temperature and the initial SOC of the battery at the charging start moment includes: determining a target calibrated range corresponding to the initial SOC of the battery at the charging start moment; and determining, as the target charging map, a charging map corresponding to the target calibrated range at the temperature of the battery at the charging start moment.

In this way, after the plurality of charging maps are obtained, the charging maps are calibrated based on information in the plurality of charging maps, and the target charging map may be quickly determined based on calibrated information during subsequent use, thereby improving efficiency of determining the target charging map.

According to any one of the first aspect or the implementations of the first aspect, the plurality of charging maps include a first charging map and a second charging map; an average value of charging rates set when a temperature of the battery is a first temperature and a state of charge of the battery is within a first SOC range in the first charging map is greater than an average value of charging rates set when the temperature of the battery is the first temperature and the state of charge of the battery is within the first SOC range in the second charging map; or an average value of charging rates set when a temperature of the battery is a first temperature and a state of charge of the battery is within a second SOC range in the first charging map is smaller than an average value of charging rates set when the temperature of the battery is the first temperature and the state of charge of the battery is within the second SOC range in the second charging map; and determining, based on the temperature and the initial SOC of the battery at the charging start moment, the target charging map from the plurality of preconfigured charging maps includes: if the temperature of the battery at the charging start moment is the first temperature, and the SOC range in which the initial SOC of the battery at the charging start moment is located is the first SOC range, determining that the first charging map is the target charging map; or if the temperature of the battery at the charging start moment is the first temperature, and the SOC range in which the initial SOC of the battery at the charging start moment is located is the second SOC range, determining that the second charging map is the target charging map.

According to any one of the first aspect or the implementations of the first aspect, the method further includes: when an SOC of the battery after previous charging of the battery ends does not reach a target SOC value, and the battery is recharged after being discharged, if a difference between a first SOC of the battery at a previous charging end moment and a second SOC of the battery at a recharging start moment is less than a threshold, performing recharging based on a target map determined in the previous charging process.

In some examples, when the SOC of the battery after previous charging of the battery ends does not reach the target SOC value, and the battery is recharged after self-discharge, if the difference between the first SOC of the battery at the previous charging end moment and the second SOC of the battery at the recharging start moment is less than the first preset threshold, recharging is performed based on the target map determined in the previous charging process.

In some examples, the first preset threshold is a maximum threshold of a state of charge that is consumed by the battery during self-discharge and lithium plating-free and that is determined in advance through an experiment.

In some examples, when the SOC of the battery after previous charging of the battery ends does not reach the target SOC value, and the battery is recharged after self-discharge, if the difference between the first SOC of the battery at the previous charging end moment and the second SOC of the battery at the recharging start moment is not less than the first preset threshold, the target charging map is determined from the plurality of preconfigured charging maps based on a temperature and the second SOC of the battery at the recharging start moment, and recharging is performed based on the target charging map.

In some examples, when the SOC of the battery after previous charging of the battery ends does not reach the target SOC value, and the battery is recharged after cyclic discharge, if a difference between a third SOC of the battery at the previous charging end moment and a fourth SOC of the battery at the recharging start moment is less than a second preset threshold, recharging is performed based on the target map determined in the previous charging process.

In some examples, the second preset threshold is a maximum threshold of a state of charge that is consumed by the battery during cyclic discharge and lithium plating-free and that is determined in advance through an experiment.

In some examples, when the SOC of the battery after previous charging of the battery ends does not reach the target SOC value, and the battery is recharged after cyclic discharge, if the difference between the third SOC of the battery at the previous charging end moment and the fourth SOC of the battery at the recharging start moment is not less than the second preset threshold, the target charging map is determined from the plurality of preconfigured charging maps based on a temperature and the fourth SOC of the battery at the recharging start moment, and recharging is performed based on the target charging map.

According to any one of the first aspect or the implementations of the first aspect, the second preset threshold is greater than the first preset threshold.

In this way, in different usage scenarios, the battery is charged based on different charging maps. When the battery is recharged after slight power consumption, the battery is recharged based on the target charging map used the last time, to reduce battery consumption. This ensures safe charging of the battery, improves charging efficiency and reliability of the battery, and improves charging experience of a user while ensuring a charging speed of the battery.

According to a second aspect, an embodiment of this application provides a battery charging apparatus. The apparatus includes an obtaining module, configured to obtain a temperature of a battery and an initial state of charge SOC of the battery at a charging start moment; a determining module, configured to determine, based on the temperature and the initial SOC of the battery at the charging start moment, a target charging map from a plurality of preconfigured charging maps; and a charging module, configured to perform charging based on the target charging map.

According to the second aspect, the target charging map meets a preset condition.

In some examples, the preset condition includes at least one of the following: the charging rate corresponding to the temperature and the initial SOC of the battery at the charging start moment is the highest in the target charging map of the plurality of preconfigured charging maps; or an average value of the charging rates corresponding to the temperature of the battery at the charging start moment and an SOC range in which the initial SOC is located is the largest in the target charging map of the plurality of preconfigured charging maps.

According to any one of the second aspect or the implementations of the second aspect, the charging map indicates charging rates of the battery that correspond to different temperatures and different SOCs.

According to any one of the second aspect or the implementations of the second aspect, charging rates corresponding to a same temperature and a same SOC are the same or different in different charging maps.

According to any one of the second aspect or the implementations of the second aspect, the determining module is further configured to determine, in each charging map, a charging rate corresponding to the temperature and the initial SOC of the battery at the charging start moment.

According to any one of the second aspect or the implementations of the second aspect, the determining module is further configured to determine, from a plurality of charging rates corresponding to the plurality of charging maps, a charging map with a highest charging rate as the target charging map.

According to any one of the second aspect or the implementations of the second aspect, the plurality of charging maps include a first charging map and a second charging map; and an average value of charging rates set when a temperature of the battery is a first temperature and a state of charge of the battery is within a first SOC range in the first charging map is greater than an average value of charging rates set when the temperature of the battery is the first temperature and the state of charge of the battery is within the first SOC range in the second charging map; or an average value of charging rates set when a temperature of the battery is a first temperature and a state of charge of the battery is within a second SOC range in the first charging map is smaller than an average value of charging rates set when the temperature of the battery is the first temperature and the state of charge of the battery is within the second SOC range in the second charging map; and the determining module is further configured to: if the temperature of the battery at the charging start moment is the first temperature, and the SOC range in which the initial SOC of the battery at the charging start moment is located is the first SOC range, determine that the first charging map is a target charging map.

According to any one of the second aspect or the implementations of the second aspect, the determining module is further configured to: if the temperature of the battery at the charging start moment is the first temperature, and the SOC range in which the initial SOC of the battery at the charging start moment is located is the second SOC range, determine that the second charging map is the target charging map.

According to any one of the second aspect or the implementations of the second aspect, the apparatus further includes a safety module; and the safety module is configured to: when an SOC of the battery after previous charging of the battery ends does not reach a target SOC value, and the battery is recharged after being discharged, if a difference between a first SOC of the battery at a previous charging end moment and a second SOC of the battery at a recharging start moment is less than a threshold, perform recharging based on a target map determined in the previous charging process.

In some examples, the safety module is further configured to: when the SOC of the battery after previous charging of the battery ends does not reach the target SOC value, and the battery is recharged after self-discharge, if the difference between the first SOC of the battery at the previous charging end moment and the second SOC of the battery at the recharging start moment is less than the first preset threshold, perform recharging based on the target map determined in the previous charging process.

In some examples, the first preset threshold is a maximum threshold of a state of charge that is consumed by the battery during self-discharge and lithium plating-free and that is determined in advance through an experiment.

In some examples, the safety module is further configured to: when the SOC of the battery after previous charging of the battery ends does not reach the target SOC value, and the battery is recharged after self-discharge, if the difference between the first SOC of the battery at the previous charging end moment and the second SOC of the battery at the recharging start moment is not less than the first preset threshold, determine the target charging map from the plurality of preconfigured charging maps based on a temperature and the second SOC of the battery at the recharging start moment, and perform recharging based on the target charging map.

In some examples, the safety module is further configured to: when the SOC of the battery after previous charging of the battery ends does not reach the target SOC value, and the battery is recharged after cyclic discharge, if a difference between a third SOC of the battery at the previous charging end moment and a fourth SOC of the battery at the recharging start moment is less than a second preset threshold, perform recharging based on the target map determined in the previous charging process.

In some examples, the second preset threshold is a maximum threshold of a state of charge that is consumed by the battery during cyclic discharge and lithium plating-free and that is determined in advance through an experiment.

In some examples, the safety module is further configured to: when the SOC of the battery after previous charging of the battery ends does not reach the target SOC value, and the battery is recharged after cyclic discharge, if the difference between the third SOC of the battery at the previous charging end moment and the fourth SOC of the battery at the recharging start moment is not less than the second preset threshold, determine the target charging map from the plurality of preconfigured charging maps based on a temperature and the fourth SOC of the battery at the recharging start moment, and perform recharging based on the target charging map.

According to any one of the second aspect or the implementations of the second aspect, the second preset threshold is greater than the first preset threshold.

According to any one of the second aspect or the implementations of the second aspect, the apparatus further includes a configuration module; and the configuration module is configured to: before the temperature of the battery and the initial state of charge SOC of the battery at the charging start moment are obtained, determine a plurality of temperature values, and separately set a plurality of charging rates for a plurality of first states of charge corresponding to each temperature value, to obtain a plurality of charging maps, where the first states of charge are all or a part of states of charge that are predetermined from all states of charge of the battery.

According to any one of the second aspect or the implementations of the second aspect, the apparatus further includes a calibration module; and the calibration module is configured to: after the plurality of charging maps are obtained, for a same temperature, determine a plurality of calibrated SOC ranges based on the plurality of charging maps, where the calibrated SOC ranges indicate a plurality of SOC ranges corresponding to the same temperature.

According to any one of the second aspect or the implementations of the second aspect, the calibration module is further configured to determine, from the plurality of charging maps, a charging map corresponding to each calibrated SOC range at the same temperature.

According to any one of the second aspect or the implementations of the second aspect, the determining module is further configured to determine a target calibrated range corresponding to the initial SOC of the battery at the charging start moment.

According to any one of the second aspect or the implementations of the second aspect, the determining module is further configured to determine a charging map corresponding to the target calibrated range at the temperature of the battery at the charging start moment as the target charging map.

According to a third aspect, an embodiment of this application provides an electronic device. The electronic device includes a processor and a memory. The memory is coupled to the processor, the memory is configured to store a computer-readable instruction, and when the processor reads the computer-readable instruction from the memory, the electronic device is enabled to perform the method according to any one of the first aspect or the implementations of the first aspect.

According to a fourth aspect, an embodiment of this application provides a chip system, including at least one processor and at least one interface circuit. The at least one interface circuit is configured to: perform a transceiver function, and send an instruction to the at least one processor. When the at least one processor executes the instruction, the at least one processor performs the method according to any one of the first aspect or the implementations of the first aspect.

According to a fifth aspect, this application provides a computer-readable storage medium. The computer-readable storage medium stores a computer program (which may also be referred to as an instruction or code). When the computer program is executed by an electronic device, the electronic device is enabled to perform the method according to any one of the first aspect or the implementations of the first aspect.

According to a sixth aspect, a computer program product is provided. When the computer program product runs on an electronic device, the electronic device is enabled to perform the method according to any one of the first aspect or the implementations of the first aspect.

According to a seventh aspect, a vehicle is provided. The vehicle includes the apparatus according to any one of the second aspect or the implementations of the second aspect.

For technical effect corresponding to any one of the second aspect to the seventh aspect and the implementations of the second aspect to the seventh aspect, refer to technical effect corresponding to any one of the first aspect or the implementations of the first aspect. Details are not described herein again.

### BRIEF DESCRIPTION OF DRAWINGS

FIG. 1 is a diagram of a system architecture of a battery charging system according to an embodiment of this application;
FIG. 2 is a diagram of a hardware structure of a device according to an embodiment of this application;
FIG. 3 is a diagram of a structure of a battery management system according to an embodiment of this application;
FIG. 4 is a schematic flowchart of a battery charging method according to an embodiment of this application;
FIG. 5 is a diagram 1 of a battery charging scenario according to an embodiment of this application;
FIG. 6 is a diagram 2 of a battery charging scenario according to an embodiment of this application; and
FIG. 7 is a diagram of a structure of a device according to an embodiment of this application.

### DESCRIPTION OF EMBODIMENTS

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

The terms "first" and "second" below are merely intended for a purpose of description, and shall not be understood as an indication or implication of relative importance or implicit indication of the quantity of indicated technical features. Therefore, a feature limited by "first" or "second" may explicitly or implicitly include one or more features.

In the descriptions of embodiments of this application, unless otherwise specified, "a plurality of" means two or more than two. In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Specifically, the words such as "example" or "for example" are used to present related concepts in a specific manner.

Some terms and related technologies in this application are first described, to facilitate understanding by a person skilled in the art.
1. A state of charge is a physical quantity reflecting a remaining capacity status of a battery. A value of the state of charge is defined as a ratio of the remaining battery capacity to a fully charged capacity of the battery, and is usually represented by a percentage, with a value range of 0 to 1. The state of charge indicates a battery charge level and a capability to continue operating.
   For example, when SOC=0, it indicates that a battery is fully discharged; or when SOC=1, it indicates that the battery is fully charged.
2. A charging rate is a measure of a charging speed. The charging rate is a multiple of a rated capacity of a battery in terms of a data value, and is usually represented by the letter C.

A relationship between the charging rate and a charging current is as follows: Charging rate=Charging current/Rated capacity. For example, a rated capacity of a battery is 100 ampere hours (ampere hours, Ah), and if a charging current of the battery during charging is 20 amperes (amperes, A), a charging rate is 0.2C; or if a charging current is 100A, a charging rate is 1C.

In a current charging strategy, a charging rate is determined by querying a correspondence (which may also be described as a charging map) among a temperature of a battery, a state of charge, and a charging rate based on a temperature of the battery and a state of charge of the battery during charging, to charge the battery based on a charging current corresponding to the charging rate. Generally, only one charging map is set, and charging is performed based on the only charging map. In some cases, a selected charging rate is low, resulting in a low charging speed and long charging time.

To resolve the foregoing technical problems, embodiments of this application provide a battery charging method of determining a matched target charging map from a plurality of preconfigured charging maps based on a temperature and a state of charge of a battery at a charging start moment, and performing charging based on the target charging map. In this application, a battery charging strategy is refined, to improve a battery charging speed and shorten charging time.

Technical solutions in embodiments of this application are described below with reference to the accompanying drawings in embodiments of this application. It is clear that the described embodiments are merely a part rather than all of embodiments of this application.

The battery charging method in embodiments of this application is applied to various devices using a battery. The battery can be used as an energy storage device or a power device in different devices. The various devices may include various transportation means such as a new energy vehicle, an electric vehicle, and a bus, or may include various electronic devices such as a mobile phone, a tablet computer, a personal computer (personal computer, PC), and a wearable device. A specific form of the device is not particularly limited in embodiments of this application. An application scenario of the battery and a type of the battery are not limited in embodiments of this application.

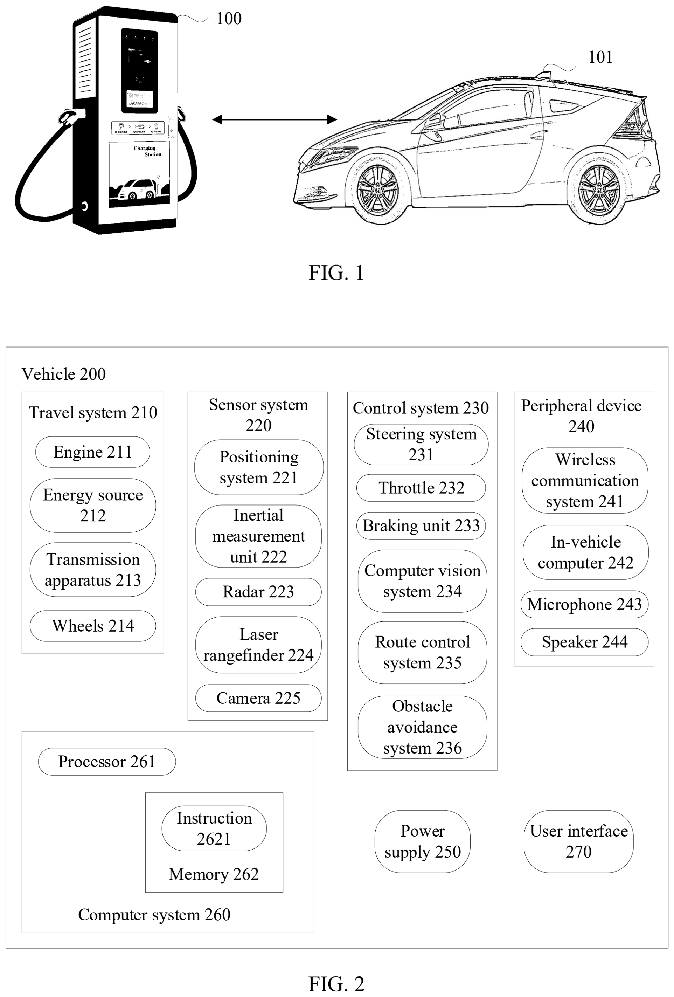

FIG. 1 is a diagram of a system architecture of a battery charging system according to an embodiment of this application. For example, in the system architecture, charging of a power battery in a new energy vehicle is used as an example for description. The charging system may include at least a charging station 100 and the new energy vehicle 101.

Specifically, the charging station 100 may include a direct current charging station and an alternating current charging station (not shown in the figure). The charging station 100 may be fixed on a ground or a wall, an input terminal is directly connected to an alternating current power grid, and an output terminal charges the new energy vehicle 101 through a charging plug.

Further, the new energy vehicle 101 may include a power battery, a boost unit, a fast charging port, an on-board charger, and a slow charging port (not shown in the figure). The power battery corresponds to a plurality of preconfigured charging maps. During charging, the new energy vehicle 101 is charged based on a target charging map in the plurality of preconfigured charging maps.

When the charging station 100 is the direct current charging station, the charging station 100 is connected to the fast charging port of the new energy vehicle 101 through the charging plug. The charging station 100 converts an alternating current of the alternating current power grid into a direct current, transfers the direct current to the fast charging port of the new energy vehicle 101 through the charging plug, and then transmits the direct current to the power battery of the new energy vehicle 101. The new energy vehicle 101 charges the power battery based on the target charging map in the plurality of preconfigured charging maps.

Optionally, a specific implementation in which the direct current is transmitted to the power battery through the fast charging port includes: If a maximum voltage of the direct current charging station is lower than a voltage of the power battery of the new energy vehicle, the direct current transmitted through the fast charging port is boosted by the boost unit and then transmitted to the power battery; or if a voltage of the direct current charging station is equal to or higher than a voltage of the power battery of the new energy vehicle, the direct current transmitted through the fast charging port is directly transmitted to the power battery.

For example, a voltage of a power battery of a new energy vehicle is usually 200 to 750 volts (voltage, V).

If the voltage of the power battery is a high voltage (for example, 750 V), but the voltage of the direct current charging station is lower than 750 V (for example, 500 V), in this case, when the new energy vehicle is charged, the direct current transmitted through the fast charging port is boosted by the boost unit and then transmitted to the power battery.

If the voltage of the power battery is a high voltage (for example, 750 V), a maximum voltage of the direct current charging station is 750 V or higher than 750 V, in this case, when the new energy vehicle is charged, the direct current transmitted through the fast charging port may be directly transmitted to the power battery, and boosting of the boost unit is not required.

When the charging station 100 is the alternating current charging station, the charging station 100 is connected to the slow charging port of the new energy vehicle 101 through the charging plug. The charging station 100 transfers an alternating current of the alternating current power grid to the slow charging port of the new energy vehicle 101 through the charging plug. The alternating current transmitted through the slow charging port is converted into a direct current via the on-board charger of the new energy vehicle 101, and then the direct current is transmitted to the power battery of the new energy vehicle 101. The new energy vehicle 101 charges the power battery based on the target charging map in the plurality of preconfigured charging maps.

In some embodiments of this application, a specific implementation in which the new energy vehicle 101 charges the power battery based on the target charging map in the plurality of preconfigured charging maps includes: The new energy vehicle 101 determines a matched target charging map from the plurality of preconfigured charging maps based on a charging start moment, a temperature of the power battery, and a state of charge of the power battery, and charges the power battery based on the target charging map.

In a possible implementation, the new energy vehicle 101 includes a memory and a processor. The memory stores the plurality of charging maps corresponding to the power battery. When the new energy vehicle 101 is charged, the processor determines the matched target charging map from the plurality of charging maps in the memory based on the charging start moment, the temperature of the power battery, and the state of charge of the power battery, and charges the power battery based on the target charging map.

In another possible implementation, the new energy vehicle 101 includes a battery management system (battery management system, BMS). The battery management system stores the plurality of charging maps corresponding to the power battery. When the new energy vehicle 101 is charged, the battery management system obtains the charging start moment, the temperature of the power battery, and the state of charge of the power battery, determines the matched target charging map from the plurality of charging maps based on the obtained temperature and state of charge, and charges the power battery based on the target charging map.

It should be added that the charging station provided in this embodiment of this application may be disposed in various scenarios such as a parking lot, a private parking space, and a charging station platform.

An example of a structure of a device to which the method provided in this application is applied is described below by using an example in which the device is a new energy vehicle.

FIG. 2 is a functional block diagram of a vehicle 200 according to an embodiment of this application. Refer to FIG. 2. The vehicle 200 may include various subsystems, such as a travel system 210, a sensor system 220, a control system 230, one or more peripheral devices 240, and a power supply 250, a computer system 260, and a user interface 270. Optionally, the vehicle 200 may include more or fewer subsystems, and each subsystem may include a plurality of elements. In addition, each subsystem and element of the vehicle 200 may be interconnected in a wired or wireless manner.

The travel system 210 may include a component that provides power for motion of the vehicle 200. In an embodiment, the travel system 210 may include an engine 211, an energy source 212, a transmission apparatus 213, and wheels 214.

The engine 211 may be an internal combustion engine, a motor, an air compression engine, or a combination with other types of engines. The engine 211 converts the energy source 212 into mechanical energy. An example of the energy source 212 includes gasoline, diesel, a solar panel, a battery, and another power source. The transmission apparatus 213 may transmit mechanical power from the engine 211 to the wheels 214. The transmission apparatus 213 may include a gearbox, a differential, and a drive shaft.

The sensor system 220 may include several sensors that sense information about a surrounding environment of the vehicle 200. For example, the sensor system 220 may include a positioning system 221, an inertia measurement unit (inertial measurement unit, IMU) 222, a radar 223, a laser rangefinder 224, and a camera 225. In embodiments of this application, the sensor system 220 may be configured to measure parameters such as a temperature of a battery and a state of charge of the battery.

The control system 230 controls an operation of the vehicle 200 and an operation of a component of the vehicle 200. The control system 230 may include a plurality of elements, including a steering system 231, a throttle 232, a braking unit 233, a computer vision system 234, a route control system 235, and an obstacle avoidance system 236, where the obstacle avoidance system 236 may also be referred to as an obstacle avoidance system.

The vehicle 200 interacts with an external sensor, another vehicle, another computer system, or a user via the peripheral device 240. The peripheral device 240 may include a wireless communication system 241, an in-vehicle computer 242, a microphone 243, and/or a speaker 244.

The power supply 250 may supply power to the components of the vehicle 200. In an embodiment, the power supply 250 may be a rechargeable lithium-ion battery or a rechargeable lead-acid battery. One or more battery strings of such a battery may be configured as a power supply to supply power to various components of the vehicle 200. In some embodiments, the power supply 250 and the energy source 212 may be implemented together, for example, on an all-electric vehicle.

Some or all of functions of the vehicle 200 are controlled by the computer system 260. The computer system 260 may include at least one processor 261. The processor 261 executes an instruction 2621 stored in a non-transitory computer-readable medium like a memory 262.

The processor 261 may be any conventional processor, for example, a commercially available central processing unit (central processing unit, CPU). Optionally, the processor may be a dedicated device, for example, an application-specific integrated circuit (application-specific integrated circuit, ASIC) or another hardware-based processor. In some embodiments, the memory 262 may include the instruction 2621 (for example, program logic), and the instruction 2621 may be executed by the processor 261 to perform various functions of the vehicle 200.

The user interface 270 is configured to provide information for or receive information from a user of the vehicle 200. Optionally, the user interface 270 may include an interface for interaction and information exchange between one or more input/output devices in a set of peripheral devices 240 and a user.

The computer system 260 may control the function of the vehicle 200 based on inputs received from various subsystems and from the user interface 270. In some embodiments, the computer system 260 may provide control on many aspects of the vehicle 200 and the subsystems of the vehicle 200. For example, the computer system 260 may include a battery management system, and the battery management system may be configured to manage the power supply 250. Generally, the battery management system has a function of measuring a battery voltage, to prevent or avoid occurrence of an exception like battery over-discharge, over-charge, or over-temperature.

Optionally, the foregoing components are only examples. During practical application, components in the foregoing modules may be added or deleted based on an actual requirement. FIG. 2 should not be understood as a limitation on embodiments of this application.

The vehicle 200 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

In some other embodiments of this application, the vehicle may further include a hardware structure and/or a software module, and implement the functions in a form of the hardware structure, the software module, or a combination of the hardware structure and the software module. Whether a function in the foregoing functions is performed via the hardware structure, the software module, or the combination of the hardware structure and the software module depends on particular applications and design constraints of the technical solutions.

After the vehicle 200 is described, a battery management system of the vehicle 200 in this application is described below. It should be understood that embodiments of this application are applicable to a battery management system of another electronic device, for example, a mobile phone, a tablet computer, a camera, a computer, a netbook, an ultra-mobile personal computer (ultra-mobile personal computer, UMPC), a wearable device (for example, a smart band and a smart watch), an in-vehicle device, or a portable device.

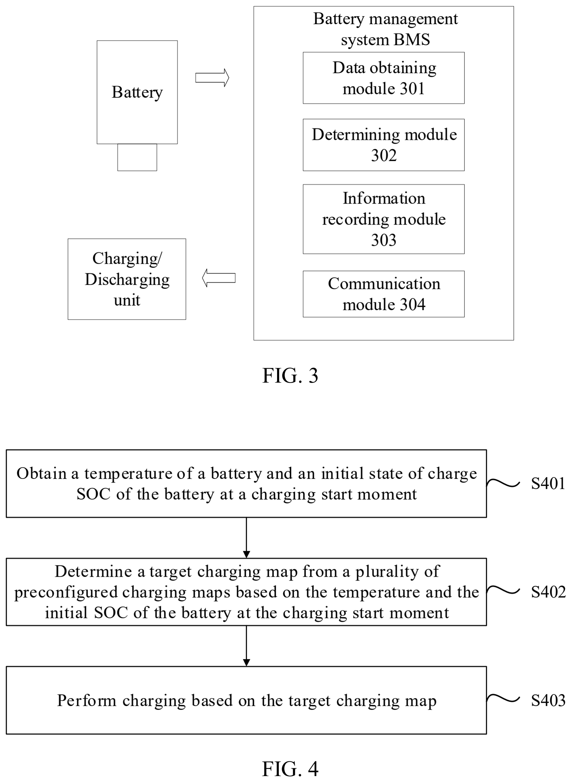

FIG. 3 is a diagram of a structure of a battery management system according to an embodiment of this application. The battery management system may include a data obtaining module 301, a determining module 302, an information recording module 303, and a communication module 304.

The data obtaining module 301 may be configured to obtain battery-related parameter information. For example, the data obtaining module 301 may include a voltage sensor and a temperature sensor respectively configured to obtain a voltage and a temperature of a battery at a charging start moment, or another parameter information. In embodiments of this application, the data obtaining module 301 is further configured to obtain an initial state of charge of the battery at the charging start moment.

The determining module 302 may be configured to determine a target charging map from a plurality of preconfigured charging maps based on the obtained battery-related parameter information, for example, determine the target charging map from the plurality of preconfigured charging maps based on the temperature and the initial SOC of the battery at the charging start moment.

The information recording module 303 may be configured to record the battery-related information, for example, record a voltage, a temperature, and a state of charge of the battery; or record the plurality of charging maps preconfigured for the battery, and record information about a charging map based on which the battery is charged each time.

The communication module 304 may be configured to implement communication between the battery management system and another device or unit, for example, may be configured to implement communication between the battery management system and a charging/discharging unit, and indicate the charging/discharging unit to perform charging based on the target charging map.

The modules in the foregoing battery management system are divided based on function logic, and may be actually divided in another manner. In addition, the foregoing modules may have other names. In addition, each module may be implemented by hardware, or may be implemented by software, or may be implemented by a combination of hardware and software. Specifically, that a module is implemented by hardware, software, or a combination of software and hardware depends on specific applications and design constraints of the technical solutions. Different modules may be implemented by different hardware, or a plurality of modules may be implemented by same hardware. This is not specifically limited in embodiments of this application.

To improve battery charging efficiency, embodiments of this application provide a battery charging method. The method is applied to various devices that use a battery, for example, applied to the vehicle 200 shown in FIG. 2, and may be specifically performed by a battery management system or a processor. The battery management system and the processor may be disposed inside the vehicle 200, or may be disposed outside the vehicle 200. FIG. 4 is a flowchart of a battery charging method according to an embodiment of this application. The method includes the following steps S401 to S403.

S401: Obtain a temperature of a battery and an initial state of charge SOC of the battery at a charging start moment.

In some embodiments of this application, when the battery is charged, the temperature of the battery at the charging start moment is obtained via a temperature sensor.

For example, when a new energy vehicle is connected to a charging station for charging, the new energy vehicle obtains a temperature of a battery at a current moment via a temperature sensor.

In some embodiments of this application, a state of charge of the battery is monitored in real time. When the battery is charged, the state of charge of the battery at the charging start moment is directly obtained.

Optionally, in some implementations, when the battery is charged, the state of charge of the battery at the charging start moment is obtained through calculation based on a state of charge prediction algorithm. For example, the state of charge prediction algorithm may be a coulomb counting method, an open-circuit voltage method, an integrated algorithm of an ampere-hour integration method and an open-circuit voltage method, or another algorithm.

In some other implementations, when the battery is charged, a voltage of the battery at the charging start moment is obtained, and the state of charge corresponding to the voltage is determined based on a correspondence between the voltage and the state of charge.

A method for obtaining the state of charge is not limited in embodiments of this application. For details, refer to the conventional technology. Details are not described herein.

S402: Determine, based on the temperature and the initial SOC of the battery at the charging start moment, a target charging map from a plurality of preconfigured charging maps.

In some embodiments of this application, the plurality of charging maps are preconfigured. The charging map indicates charging rates of the battery corresponding to different temperatures and different states of charge. In different charging maps, charging rates of the battery corresponding to a same temperature and a same state of charge may be the same or may be different.

The charging rate is a highest charging rate, that is, a highest value that can be reached by the charging rate when the battery is charged at a temperature and in a state of charge.

The target charging map meets a preset condition, and the preset condition includes at least one of the following: a charging rate corresponding to the temperature and the initial SOC of the battery at the charging start moment is the highest in the target charging map of the plurality of preconfigured charging maps; or an average value of charging rates corresponding to the temperature of the battery at the charging start moment, and an SOC range in which the initial SOC is located is the largest in the target charging map of the plurality of preconfigured charging maps.

In this way, in embodiments of this application, after the temperature and the state of charge of the battery at the charging start moment are obtained, the target charging map is obtained from the plurality of maps through matching based on the temperature and the state of charge, and charging is performed based on the charging rate in the target charging map.

Some manners of configuring the charging maps provided in embodiments of this application are described below.

A plurality of temperature values are determined within a safe temperature range of the battery, and a plurality of charging rates for a plurality of first states of charge corresponding to each temperature value are separately set, to obtain the plurality of charging maps.

The safe temperature range of the battery is a temperature range obtained through calculation based on battery properties and a safety indicator during safe charging of the battery. For example, a safe temperature range of a lithium battery is 0°C to 45°C, and a safe temperature range of a power battery of a new energy vehicle is -20°C to 55°C.

It may be understood that, in a battery charging process, an excessively low temperature causes the battery to fail to charge. A battery temperature rises due to internal resistance and electrochemical reaction of the battery. If the temperature rises because a current is too high or the internal resistance of the battery increases due to aging, the battery temperature increases sharply. This shortens battery lifetime and stops battery charging. Therefore, the battery temperature during charging is monitored based on a lowest temperature and a highest temperature in the safe temperature range, to ensure safe use of the battery.

In some implementations, the plurality of temperature values are common temperature values obtained based on an experiment. For example, an appropriate charging temperature of an electrochemical cell of the battery is within 0°C to 40°C, and m temperature values are selected from the range.

In some other implementations, in the safe temperature range of the battery, the safe temperature range of the battery is divided into a plurality of temperature zones in advance, and boundary temperatures of the temperature zones are determined as the to-be-selected temperature values.

The first states of charge may be all or a part of states of charge that are determined in advance from all states of charge of the battery.

In some implementations, all states of charge of the battery are determined as the first states of charge.

In some other implementations, a part of states of charge of the battery are determined as the first states of charge.

Optionally, that a part of states of charge of the battery are determined as the first states of charge may be implemented as follows: A part of states of charge are determined as the first states of charge based on historical data or experience, or a part of states of charge are determined as the first states of charge based on parameter information of the battery. For example, corresponding states of charge when charging rates obviously change are determined as the first states of charge based on data about historical charging maps.

Optionally, that a part of states of charge of the battery are determined as the first states of charge may alternatively be implemented as follows: The states of charge of the battery are divided into a plurality of state of charge ranges, and boundary states of charge of the state of charge ranges are determined as the first states of charge. A method for division of the ranges may be equal division. To be specific, sizes of ranges after division are the same, and quantities of states of charge included in the ranges are the same. Alternatively, the ranges may be not equally divided. To be specific, sizes of ranges after division are different, and quantities of states of charge included in the ranges are different. A method for dividing the ranges and quantities of states of charge in the ranges after division are not limited in embodiments of this application.

For example, the states of charge of the battery are equally divided into n state of charge ranges, and boundary states of charge (n+1 states of charge) of the state of charge ranges are determined as the first states of charge.

A manner of determining the first states of charge and a quantity of the first states of charge are not limited in embodiments of this application.

Optionally, charging rates corresponding to each first state of charge at a specific temperature may be obtained through calculation by using an experiment. For example, the charging rates are determined by using a three-electrode testing method. The charging rates measured in the experiment are theoretical values. However, the battery may experience degradation during use, and experiment test results cannot be achieved in actual use. Therefore, data measured in the experiment needs to be adjusted to obtain actual charging rates of an electrochemical cell.

A method for setting the charging rates is not limited in embodiments of this application. For details, refer to the conventional technology. Details are not described herein.

In addition, a quantity of charging rates corresponding to each first state of charge at the specific temperature is not limited in embodiments of this application.

In another implementation, the temperatures of the battery may be divided into a plurality of temperature zones in advance within the safe temperature range of the battery. For each temperature zone, a plurality of charging rates are separately set for a plurality of first states of charge, to obtain the plurality of charging maps. That is, different temperatures in a same temperature zone correspond to same charging rates in a same state of charge.

For example, the temperatures of the battery are divided into a plurality of temperature zones, and the plurality of charging maps are configured based on boundary temperatures of the temperature zones.

In the safe temperature range of the battery, the temperatures of the battery are equally divided into k temperature zones in advance, to obtain k+1 boundary temperatures, which are respectively Tₘᵢₙ, Tₘᵢₙ+ΔT, Tₘᵢₙ+2ΔT, Tₘᵢₙ+3ΔT, ..., Tₘᵢₙ+(k-1)ΔT, Tₘₐₓ, and ΔT=(Tₘₐₓ-Tₘᵢₙ)/k. Tₘᵢₙ and Tₘₐₓ are a minimum temperature and a maximum temperature in the safe temperature range of the battery that are determined through an experiment test or before delivery.

After the boundary temperatures of the temperature zones are determined, the first states of charge are determined by dividing the states of charge of the battery into the plurality of state of charge ranges.

In some examples, the states of charge of the battery are equally divided into m state of charge ranges, and boundary states of charge of the state of charge ranges are determined as the first states of charge. That is, m+1 first states of charge are obtained, and are SOCₘᵢₙ, SOCₘᵢₙ+ΔSOC, SOCₘᵢₙ+2ΔSOC, SOCₘᵢₙ+3ΔSOC, ..., SOCₘᵢₙ+(m-1)ΔSOC, SOCₘₐₓ, ΔSOC=(SOCₘₐₓSOCₘᵢₙ)/m. SOCₘᵢₙ may be 0, and SOCₘₐₓ may be 1.

After the boundary temperatures and the first states of charge are determined, a plurality of charging rates are separately set for each first state of charge at each boundary temperature.

In some examples, that the boundary temperature is Tₘᵢₙ+ΔT is used as an example. Two charging rates are separately set for each first state of charge at the temperature, and are a first charging rate and a second charging rate. In this case, information about the first states of charge and the charging rates at Tₘᵢₙ+ΔT shown in Table 1 is obtained (Table 1 shows only some information).

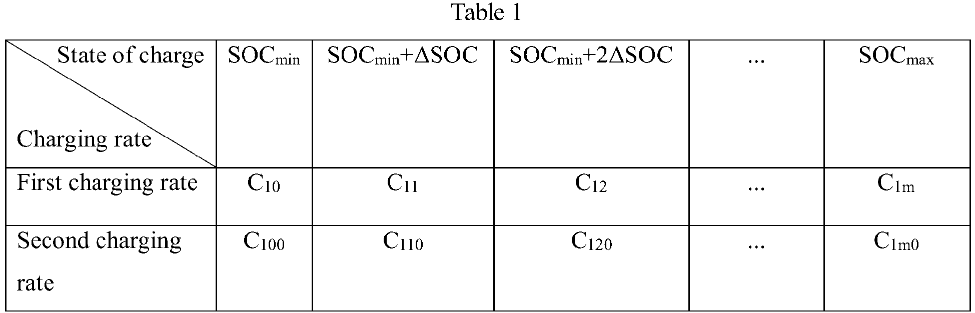

As shown in Table 1, in a case in which the temperature of the battery is Tₘᵢₙ+ΔT, when the first state of charge is SOCₘᵢₙ, the first charging rate C₁₀ and the second charging rate C₁₀₀ are correspondingly set; when the first state of charge is SOCₘᵢₙ+ΔSOC, the first charging rate C₁₁ and the second charging rate C₁₁₀ are correspondingly set; when the first state of charge is SOCₘᵢₙ+2ΔSOC, the first charging rate C₁₂ and the second charging rate C₁₂₀ are correspondingly set, ..., and when the first state of charge is SOCₘₐₓ, the first charging rate C₁ₘ and the second charging rate C₁ₘ₀ are correspondingly set. It can be learned that when the temperature of the battery is Tₘᵢₙ+ΔT, the two charging rates are correspondingly set for each first state of charge at the temperature.

It may be understood that, in Table 1, to describe a plurality of charging rates correspondingly set for each first state of charge, different values are used to represent the charging rates. However, specific values of the plurality of charging rates corresponding to each first state of charge may also be the same. For example, the values of C₁₀ and C₁₀₀ are the same, the values of C₁₁ and C₁₁₀ are the same, the values of C₁₂ and C₁₂₀ are different, and the values of C₁ₘ and C₁ₘ₀ are the same.

In this way, the foregoing processing manner is used for each boundary temperature, so that two charging rates are separately set for each first state of charge of the battery at each boundary temperature, and a correspondence between the first states of charge and the charging rates at the boundary temperature shown in Table 1 may be obtained for each boundary temperature.

After the plurality of charging rates in each first state of charge at each boundary temperature are determined, information about the first states of charge and the charging rates at different boundary temperatures is combined, to obtain the plurality of charging maps.

In some implementations, the charging maps obtained through combination are a plurality of tables.

For example, correspondences between the first states of charge and the first charging rates at the boundary temperatures are combined to be charging map 1 shown in Table 2, and correspondences between the first states of charge and the second charging rates at the boundary temperatures are combined to be charging map 2 shown in Table 3. In this way, the plurality of charging maps are obtained.

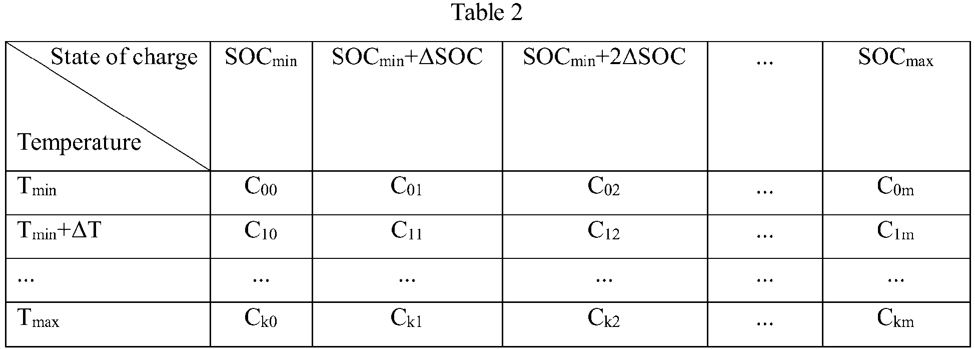

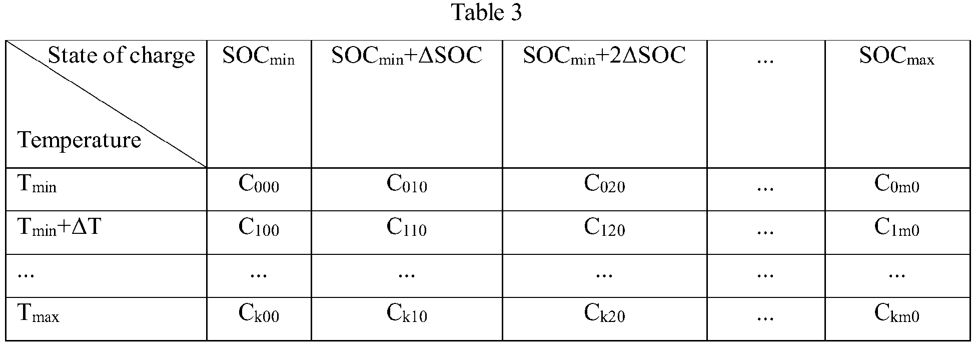

As shown in Table 2, when the temperature of the battery is Tₘᵢₙ+ΔT, the charging rates corresponding to the first states of charge are the first charging rates.

As shown in Table 3, when the temperature of the battery is Tₘᵢₙ+ΔT, the charging rates corresponding to the first states of charge are the second charging rates.

In some other implementations, the charging maps obtained through combination are represented in a three-dimensional curve plot.

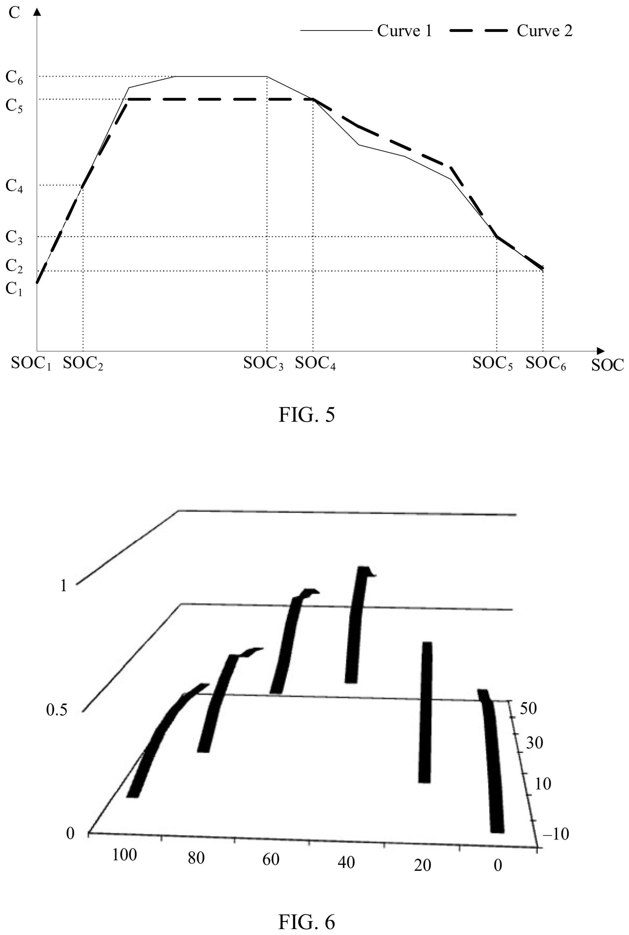

For example, FIG. 5 shows curves (for example, a curve 1 and a curve 2) of relationships between charging rates and states of charge corresponding to the temperature Tₘᵢₙ+ΔT of the battery.

After a curve of relationships between a plurality of states of charge corresponding to a temperature value and charging rates is determined, curves (for example, the curve 1) of relationships between first states of charge and charging rates corresponding to a plurality of temperatures are combined to obtain charging map 1, and curves (for example, the curve 2) of relationships between first states of charge and charging rates corresponding to the plurality of temperatures are combined to obtain charging map 2. In this way, the plurality of charging maps are obtained.

For example, FIG. 6 shows a charging map obtained by combining a plurality of curves. A representation form of the charging maps is an example of a three-dimensional curve plot.

The representation form of the charging maps is not limited in embodiments of this application.

In this way, two sets of charging maps are preconfigured, and a same temperature and a same state of charge in the sets of charging maps correspond to one charging rate. A same temperature and a same state of charge in the plurality of charging maps correspond to a plurality of charging rates. In embodiments of this application, the plurality of charging maps are preconfigured, so that during subsequent battery charging, the matched target charging map is selected from the plurality of charging maps based on an actual requirement, and then charging is performed based on a charging rate in the target charging map, thereby accelerating a charging speed and shortening charging time.

It may be understood that, in the foregoing example, two charging rates are set for a same temperature and a same state of charge. During actual application, a plurality of charging rates may be set for a same temperature and a same state of charge, to obtain the plurality of charging maps. The plurality of specified charging rates need to meet constraints such as "lithium plating-free" and "minimum charge time". A quantity of charging maps is not limited in embodiments of this application.

Based on the plurality of preconfigured charging maps, during battery charging, one target charging map may be determined from the plurality of charging maps based on the temperature of the battery and the state of charge of the battery at the charging start moment, to perform charging. In addition, in different charging scenarios, the battery can be efficiently charged based on different charging maps, thereby accelerating a charging speed, shortening charging time, and being more applicable.

The following describes some manners of determining the target charging map from the plurality of preconfigured charging maps provided in embodiments of this application.

In some embodiments, after the plurality of charging maps are obtained, the plurality of configured charging maps are directly used. The target charging map is determined from the plurality of preconfigured charging maps based on the temperature of the battery and the initial state of charge of the battery at the charging start moment.

In a possible implementation, a charging rate corresponding to the temperature of the battery and the state of charge of the battery at the charging start moment is determined in each charging map; and a charging map with a highest charging rate is determined as the target charging map from a plurality of charging rates corresponding to the plurality of charging maps.

For example, based on the example in FIG. 6, when the charging maps are represented in the three-dimensional curve plot, the charging rate corresponding to the temperature of the battery and the state of charge of the battery at the charging start moment is determined based on information about each charging map, and the charging map with a higher charging rate is directly determined as the target charging map.

In another possible implementation, whether a plurality of charging maps corresponding to the temperature exist in the plurality of charging maps is determined based on the temperature of the battery at the charging start moment; and if the plurality of charging maps exist, a charging map with a higher charging rate is determined as the target charging map based on the state of charge of the battery at the charging start moment from the plurality of charging maps corresponding to the temperature. If the charging maps corresponding to the temperature do not exist, a target temperature that matches the temperature of the battery at the charging start moment is determined; and a charging map with a higher charging rate is determined as the target charging map based on the state of charge of the battery at the charging start moment from the plurality of charging maps corresponding to the target temperature.

For example, a safe temperature range (-20°C to 55°C) of a power battery is divided into a plurality of temperature zones (for example, 20°C to 25°C and 25°C to 30°C) at an interval of 5°C in advance, and the plurality of preconfigured charging maps include a plurality of charging rates in each state of charge corresponding to each boundary temperature. If the temperature of the battery at the charging start moment is 24°C, 25°C closest to 24°C is determined as the target temperature. In this case, a charging map with a higher charging rate is determined as the target charging map from the plurality of charging maps based on the state of charge of the battery at the charging start moment and the target temperature.

In another possible implementation, a charging map with a largest average value of charging rates corresponding to an SOC range in which the initial state of charge of the battery is located is determined as the target charging map based on the temperature of the battery at the charging start moment.

Specifically, a manner of determining an average value of charging rates corresponding to a SOC range includes performing integration calculation based on a length of the SOC range and the plurality of preconfigured charging maps, to determine the average value of the charging rates corresponding to the SOC range in each charging map; or determining, based on a plurality of charging rates in the SOC range in each charging map, the average value of the charging rates corresponding to the SOC range in each charging map.

For example, based on the foregoing example, if the temperature of the battery at the charging start moment is Tₘᵢₙ+ΔT, the curves of the relationships between the states of charge corresponding to the temperature and the charging rates are shown in FIG. 5. If the initial state of charge is within [SOC₂, SOC₃], average values of charging rates in the range in the charging map 1 and the charging map 2 are calculated through integration based on the range shown in FIG. 5. For example, an area S1 of the curve 1 corresponding to the charging map 1 within [SOC₂, SOC₃] is calculated through integration, and the area S1 is divided by a length of the range. That is, S1/(SOC₃-SOC₂) is used to obtain the average value 1 of the charging rates in the range in the charging map 1. An area S2 of the curve 2 corresponding to the charging map 2 within [SOC₂, SOC₃] is calculated through integration in the foregoing manner, and the area S2 is divided by the length of the range. That is, S2/(SOC₃-SOC₂) is used to obtain the average value 2 of the charging rates in the range in the charging map 2. Then, the average value 1 and the average value 2 are compared, and a charging map with a largest average value is determined as the target charging map.

For example, off-charging rates corresponding to a plurality of states of charge are selected from an SOC range in each charging map, and average values of a plurality of charging rates are determined as a plurality of charging rates of each charging map in the SOC range, to determine an average value of charging rates corresponding to the SOC range in each charging map.

In some other embodiments, after the plurality of charging maps are obtained, the plurality of charging maps are calibrated, to quickly determine the target charging map during subsequent use and improve determining efficiency of the target charging map. The target charging map is determined from the plurality of calibrated charging maps based on the temperature of the battery and the state of charge of the battery at the charging start moment.

The following describes some calibrated charging maps and a manner of determining the target charging map from the plurality of calibrated charging maps provided in embodiments of this application.

In a possible implementation, calibrating the plurality of preconfigured charging maps includes: for a same temperature, determining second states of charge based on the plurality of charging maps; determining a calibrated range (which may also be described as a calibrated SOC range) based on the second states of charge; and determining a charging map corresponding to each calibrated range at the temperature.

The second states of charge are states of charge corresponding to a maximum value and same values of a plurality of charging rates in the plurality of charging maps at the same temperature. Each temperature in the plurality of charging maps has a corresponding second state of charge. For example, the second states of charge may be states of charge corresponding to a highest point and an intersection point in curves of relationships between states of charge and charging rates corresponding to the plurality of charging maps at the same temperature.

For example, based on the example in FIG. 5, the curve 1 is the curve of relationships between the states of charge and the charging rates when the temperature of the battery is Tₘᵢₙ+ΔT in the charging map 1. The curve 2 is the curve of relationships between the states of charge and the charging rates when the temperature of the battery is Tₘᵢₙ+ΔT in the charging map 2. States of charge corresponding to intersection points of the curve 1 and the curve 2: SOC₁, the SOC₂, the SOC₄, and the SOC₅, and the state of charge SOC₃ corresponding to a highest point of the curve 1 and the curve 2 are determined as the second states of charge.

In an implementation, a plurality of second states of charge are separately used as a delimiter point, and the states of charge of the battery are divided into a plurality of calibrated ranges.

For example, based on the example in FIG. 5, five calibrated ranges are obtained by using the second states of charge SOC₁, SOC₂, SOC₃, SOC₄, and SOC₅ as delimiter points, and are respectively [SOC₁, SOC₂], (SOC₂, SOC₃], (SOC₃, SOC₄], (SOC₄, SOC₅], and (SOC₅, SOC₆].

For each calibrated range, a charging map corresponding to the calibrated range is determined in the following manner:

For a calibrated range, if charging rates corresponding to the calibrated range in the plurality of charging maps are the same, a charging map with higher charging rates corresponding to an adjacent calibrated range after the calibrated range is determined as a charging map corresponding to the calibrated range.

If the charging rates corresponding to the calibrated range in the plurality of charging maps are different, a charging map with higher charging rates corresponding to the calibrated range is determined as the charging map corresponding to the calibrated range.

For example, with reference to FIG. 5 and the foregoing five calibrated ranges, it may be obtained based on the foregoing calibration manner that when the battery temperature is Tₘᵢₙ+ΔT and the states of charge are within [SOC₁, SOC₂], charging rates corresponding to the calibrated range in the charging map 1 and the charging map 2 are the same, and charging rates corresponding to an adjacent calibrated range (SOC₂, SOC₃] after the calibrated range is further determined. Charging rates corresponding to the range (SOC₂, SOC₃] in the charging map 1 are higher than charging rates corresponding to the range in the charging map 2. Therefore, the charging map 1 is determined as a charging map corresponding to [SOC₁, SOC₂].

When the temperature of the battery is Tₘᵢₙ+ΔT, and the states of charge are within (SOC₂, SOC₃], the charging rates corresponding to the range in the charging map 1 are higher than the charging rates corresponding to the range in the charging map 2. Therefore, the charging map 1 is determined as a charging map corresponding to (SOC₂, SOC₃].

For example, a quantity of calibrated ranges may be reduced. With reference to FIG. 5, in consideration of an overall charging speed and battery safety, by using SOC₃ as a delimiter point, the states of charge of the battery are divided into two calibrated ranges, which are respectively [SOC₁, SOC₃) and [SOC₃, SOC₆].

For the calibrated range [SOC₁, SOC₃), charging rates set in the range [SOC₁, SOC₃) in the charging map 1 are higher than charging rates set in the range in the charging map 2 (for example, a first average value of the charging rates in the range [SOC₁, SOC₃) in the charging map 1 and a second average value of the charging rates in the range [SOC₁, SOC₃) in the charging map 2 are calculated, and the first average value is greater than the second average value). Therefore, the charging map 1 is determined as a charging map corresponding to [SOC₁, SOC₃).

For the calibrated range [SOC₃, SOC₆], charging rates set in the range [SOC₃, SOC₆] in the charging map 2 are generally higher than charging rates set in the range in the charging map 2 (for example, a third average value of charging rates in the range [SOC₃, SOC₆] in the charging map 1 and a fourth average value of charging rates in the range [SOC₃, SOC₆] in the charging map 2 are calculated, and the fourth average value is greater than the third average value). Therefore, the charging map 2 is determined as a charging map corresponding to [SOC₃, SOC₆].

For example, a correspondence between each calibrated range and a charging map in a case of Tₘᵢₙ+ΔT shown in Table 4 is obtained through combination based on the foregoing two calibrated ranges obtained through division and the charging map corresponding to each calibrated range.

**Table 4**

| Calibrated range | Charging map |
|---|---|
| [SOC₁, SOC₃) | Map 1 |
| [SOC₃, SOC₆] | Map 2 |

In this way, determining the target charging map from the plurality of preconfigured charging maps based on the temperature and the state of charge of the battery at the charging start moment may be specifically implemented as determining a target calibrated range based on the state of charge of the battery at the charging start moment; and determining, as the target charging map, a charging map corresponding to the target calibrated range at the temperature of the battery at the charging start moment.

For example, based on the two calibrated ranges obtained through division and the example shown in Table 4, if the temperature of the battery at the battery charging start moment is Tₘᵢₙ+ΔT, and the state of charge of the battery at the battery charging start moment is within [SOC₁, SOC₃), the map 1 is determined as the target charging map. In this way, charging is performed based on the charging map 1, thereby greatly improving a charging speed of the battery in a low SOC range.

If the temperature of the battery at the battery charging start moment is Tₘᵢₙ+ΔT, and the state of charge of the battery at the battery charging start moment is within [SOC₃, SOC₆], the map 2 is determined as the target charging map. In this way, charging is performed based on the charging map 2, thereby greatly improving a charging speed of the battery in a high SOC range.

In this way, the target charging map is determined from the plurality of charging maps based on the temperature and the state of charge of the battery at the charging start moment. In addition, charging is performed based on a charging rate in the target charging map. This can ensure that the battery is charged based on a charging map with a higher charging rate in a low SOC range or a high SOC range, greatly improve an initial charging speed, and shorten charging time in an entire SOC range.

During actual application, the following scenario may exist: A user ends charging when a new energy vehicle is not charged to a target state of charge, and is charged again after a period of time. Alternatively, the user unintentionally removes a charging plug and then connects the charging plug.

In some embodiments of this application, when the battery stops charging before being charged to a specified target state of charge during previous charging, the battery performs self-discharge. When the battery is charged again (or may be described as a next time), if an absolute value of a difference between a state of charge of the battery at a previous charging end moment and a state of charge of the battery at a next charging start moment is less than a first preset threshold, it is considered that a next charging process continues a previous charging process, and a target charging map used during the previous charging is still used for the next charging.

The first preset threshold is a maximum threshold of a state of charge that is consumed by the battery during self-discharge and lithium plating-free and that is determined in advance through an experiment.

In some other embodiments of this application, when the battery stops charging before being charged to a specified target state of charge during previous charging, the battery cyclically discharges. When the battery is charged next time, if an absolute value of a difference between a state of charge of the battery at a previous charging end moment and a state of charge of the battery at a next charging start moment is less than a second preset threshold, it may be considered that the battery consumes a small amount of electricity, and a target charging map of the previous charging is still used for the next charging.

The second preset threshold is a maximum threshold of a state of charge that is consumed by the battery during cyclic discharge and lithium plating-free and that is determined in advance through an experiment.

It may be understood that the battery has a very small amount of electricity consumed by self-discharge. Therefore, the first preset threshold is less than the second preset threshold.

It may be understood that, in embodiments of this application, the battery may be charged based on different charging maps in different usage scenarios. This greatly improves a charging speed, shortens charging time, and improves charging experience of the user in addition to ensuring battery safety.

S403: Perform charging based on the target charging map.

In some embodiments of this application, after the target charging map is determined, the battery is charged based on the target charging map.

This improves charging efficiency and reliability of the battery, accelerates a battery charging speed, and shortens battery charging time while ensures battery safety.

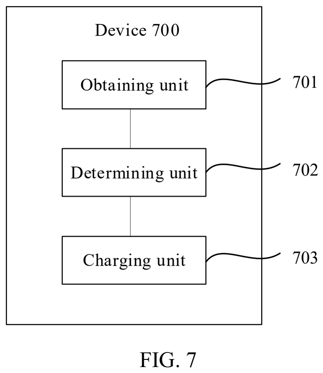

The battery charging method provided in embodiments of this application is described in detail above with reference to FIG. 4 to FIG. 6. A device provided in embodiments of this application is described in detail below with reference to FIG. 7.

In a possible design, FIG. 7 is a diagram of a structure of a device according to an embodiment of this application. As shown in FIG. 7, the device 700 may include an obtaining unit 701, a determining unit 702, and a charging unit 703. The device 700 may be configured to implement functions of the device in the foregoing method embodiments.

Optionally, the obtaining unit 701 is configured to obtain a temperature of a battery and an initial state of charge SOC of the battery at a charging start moment.

Optionally, the determining unit 702 determines, based on the temperature and the initial SOC of the battery at the charging start moment, a target charging map from a plurality of preconfigured charging maps, where the charging map indicates charging rates of the battery that correspond to different temperatures and different SOCs, the target charging map meets a preset condition, and the preset condition includes at least one of the following: the charging rate corresponding to the temperature and the initial SOC of the battery at the charging start moment is the highest in the target charging map of the plurality of preconfigured charging maps; or an average value of the charging rates corresponding to the temperature of the battery at the charging start moment and an SOC range in which the initial SOC is located is the largest in the target charging map of the plurality of preconfigured charging maps.

Optionally, the charging unit 703 is configured to perform charging based on the target charging map.

Operations and/or functions of the units in the device 700 are separately intended to implement corresponding procedures of the battery charging method in the foregoing method embodiment. All related content of steps in the foregoing method embodiment may be referenced to function descriptions of corresponding functional units. For brevity, details are not described herein again.

Optionally, the device 700 shown in FIG. 7 may further include a storage unit (not shown in FIG. 7), and the storage unit stores a program or an instruction. When the obtaining unit 701, the determining unit 702, and the charging unit 703 execute the program or the instruction, the device 700 shown in FIG. 7 is enabled to perform the battery charging method in the foregoing method embodiment.

For technical effect of the device 700 shown in FIG. 7, refer to the technical effect of the battery charging method in the foregoing method embodiment. Details are not described herein again.

In addition to a form of the device 700, the technical solutions provided in this application may alternatively be a functional unit or a chip in the device, or an apparatus that can be used together with the device.

An embodiment of this application further provides a chip system, including a processor. The processor is coupled to a memory, and the memory is configured to store a program or an instruction. When the program or the instruction is executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory (read-only memory, ROM). The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiment may be completed by using an integrated logic circuit of hardware in the processor or an instruction in a form of software. The steps in the method disclosed with reference to embodiments of this application may be directly performed and completed by a hardware processor, or may be performed and completed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the battery charging method in the foregoing embodiments.

An embodiment of this application further provides a computer program product. When the computer program product runs on a computer, the computer is enabled to perform the foregoing related steps, to implement the battery charging method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the battery charging method in the foregoing method embodiment.

The apparatus, the computer-readable storage medium, the computer program product, or the chip provided in embodiments of this application is configured to perform the corresponding method provided above. Therefore, for beneficial effect that can be achieved, refer to the beneficial effect in the corresponding method provided above. Details are not described herein again.

Methods or algorithm steps described in combination with the content disclosed in embodiments of this application may be implemented by hardware, or may be implemented by a processor by executing a software instruction. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division into the foregoing functional modules is merely used as an example for description. During actual application, the foregoing functions can be allocated to different functional modules for accomplishment based on a requirement. That is, an internal structure of the apparatus is divided into different functional modules to accomplish all or a part of the functions described above. For a detailed working process of the foregoing system, apparatus, and unit, refer to a corresponding process in the foregoing method embodiment, and details are not described herein again.

In the several embodiments provided in this application, it should be understood that the disclosed methods may be implemented in other manners. The apparatus embodiment described above is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery charging method, wherein the method comprises:
obtaining a temperature of a battery and an initial state of charge SOC of the battery at a charging start moment;
determining, based on the temperature and the initial SOC of the battery at the charging start moment, a target charging map from a plurality of preconfigured charging maps, wherein the charging map indicates charging rates of the battery that correspond to different temperatures and different SOCs, the target charging map meets a preset condition, and the preset condition comprises at least one of the following: the charging rate corresponding to the temperature and the initial SOC of the battery at the charging start moment is the highest in the target charging map of the plurality of preconfigured charging maps; or an average value of the charging rates corresponding to the temperature of the battery at the charging start moment and an SOC range in which the initial SOC is located is the largest in the target charging map of the plurality of preconfigured charging maps; and
performing charging based on the target charging map.

2. The battery charging method according to claim 1, wherein determining, based on the temperature and the initial SOC of the battery at the charging start moment, the target charging map from the plurality of preconfigured charging maps comprises:
determining, in each charging map, a charging rate corresponding to the temperature and the initial SOC of the battery at the charging start moment; and
determining, from a plurality of charging rates corresponding to the plurality of charging maps, a charging map with the highest charging rate as the target charging map.

3. The battery charging method according to claim 1, wherein the plurality of charging maps comprise a first charging map and a second charging map;
an average value of charging rates set when a temperature of the battery is a first temperature and a state of charge of the battery is within a first SOC range in the first charging map is greater than an average value of charging rates set when the temperature of the battery is the first temperature and the state of charge of the battery is within the first SOC range in the second charging map; or
an average value of charging rates set when a temperature of the battery is the first temperature and a state of charge of the battery is within a second SOC range in the first charging map is smaller than an average value of charging rates set when the temperature of the battery is the first temperature and the state of charge of the battery is within the second SOC range in the second charging map; and
determining, based on the temperature and the initial SOC of the battery at the charging start moment, the target charging map from the plurality of preconfigured charging maps comprises:
if the temperature of the battery at the charging start moment is the first temperature, and the SOC range in which the initial SOC of the battery at the charging start moment is located is the first SOC range, determining that the first charging map is the target charging map; or
if the temperature of the battery at the charging start moment is the first temperature, and the SOC range in which the initial SOC of the battery at the charging start moment is located is the second SOC range, determining that the second charging map is the target charging map.

4. The battery charging method according to any one of claims 1 to 3, wherein the method further comprises:
when an SOC of the battery after previous charging of the battery ends does not reach a target SOC value, and the battery is recharged after being discharged, if a difference between a first SOC of the battery at a previous charging end moment and a second SOC of the battery at a recharging start moment is less than a threshold, performing recharging based on a target map determined in the previous charging process.

5. The battery charging method according to any one of claims 1 to 4, wherein before obtaining the temperature of the battery and the state of charge SOC of the battery at the charging start moment, the method further comprises:
determining a plurality of temperature values, and separately setting a plurality of charging rates for a plurality of first states of charge corresponding to each temperature value, to obtain a plurality of charging maps, wherein the first states of charge are all or a part of states of charge that are predetermined from all states of charge of the battery.

6. The battery charging method according to claim 5, wherein after obtaining the plurality of charging maps, the method further comprises:
for a temperature, determining a plurality of calibrated SOC ranges based on the plurality of charging maps, wherein the calibrated SOC ranges indicate a plurality of SOC ranges corresponding to the same temperature;
determining, from the plurality of charging maps, a charging map corresponding to each calibrated SOC range at the same temperature; and
determining, based on the temperature and the initial SOC of the battery at the charging start moment, the target charging map from the plurality of preconfigured charging maps comprises:
determining a target calibrated range corresponding to the initial SOC of the battery at the charging start moment; and
determining a charging map corresponding to the target calibrated range at the temperature of the battery at the charging start moment as the target charging map.

7. A battery charging apparatus, comprising:
an obtaining module, configured to obtain a temperature of a battery and an initial state of charge SOC of the battery at a charging start moment;
a determining module, configured to determine, based on the temperature and the initial SOC of the battery at the charging start moment, a target charging map from a plurality of preconfigured charging maps, wherein the charging map indicates charging rates of the battery that correspond to different temperatures and different SOCs, the target charging map meets a preset condition, and the preset condition comprises at least one of the following: the charging rate corresponding to the temperature and the initial SOC of the battery at the charging start moment is the highest in the target charging map of the plurality of preconfigured charging maps; or an average value of the charging rates corresponding to the temperature of the battery at the charging start moment and an SOC range in which the initial SOC is located is the largest in the target charging map of the plurality of preconfigured charging maps; and
a charging module, configured to perform charging based on the target charging map.

8. The battery charging apparatus according to claim 7, wherein
the determining module is further configured to determine, in each charging map, a charging rate corresponding to the temperature and the initial SOC of the battery at the charging start moment; and
the determining module is further configured to determine, from a plurality of charging rates corresponding to the plurality of charging maps, a charging map with the highest charging rate as the target charging map.

9. The battery charging apparatus according to claim 7, wherein the plurality of charging maps comprise a first charging map and a second charging map;
an average value of charging rates set when a temperature of the battery is a first temperature and a state of charge of the battery is within a first SOC range in the first charging map is greater than an average value of charging rates set when the temperature of the battery is the first temperature and the state of charge of the battery is within the first SOC range in the second charging map; or
an average value of charging rates set when a temperature of the battery is the first temperature and a state of charge of the battery is within a second SOC range in the first charging map is smaller than an average value of charging rates set when the temperature of the battery is the first temperature and the state of charge of the battery is within the second SOC range in the second charging map; and
the determining module is further configured to: if the temperature of the battery at the charging start moment is the first temperature, and the SOC range in which the initial SOC of the battery at the charging start moment is located is the first SOC range, determine that the first charging map is the target charging map; or
the determining module is further configured to: if the temperature of the battery at the charging start moment is the first temperature, and the SOC range in which the initial SOC of the battery at the charging start moment is located is the second SOC range, determine that the second charging map is the target charging map.

10. The battery charging apparatus according to any one of claims 7 to 9, wherein the apparatus further comprises a safety module; and
the safety module is configured to: when an SOC of the battery after previous charging of the battery ends does not reach a target SOC value, and the battery is recharged after being discharged, if a difference between a first SOC of the battery at a previous charging end moment and a second SOC of the battery at a recharging start moment is less than a threshold, perform recharging based on a target map determined in the previous charging process.

11. The battery charging apparatus according to any one of claims 7 to 10, wherein the apparatus further comprises a configuration module; and
the configuration module is configured to: determine a plurality of temperature values, and separately set a plurality of charging rates for a plurality of first states of charge corresponding to each temperature value, to obtain a plurality of charging maps, wherein the first states of charge are all or a part of states of charge that are predetermined from all states of charge of the battery.

12. The battery charging apparatus according to claim 11, wherein the apparatus further comprises a calibration module;
the calibration module is configured to: for a same temperature, determine a plurality of calibrated SOC ranges based on the plurality of charging maps, wherein the calibrated SOC ranges indicate a plurality of SOC ranges corresponding to the same temperature;
the calibration module is further configured to determine, from the plurality of charging maps, a charging map corresponding to each calibrated SOC range at the same temperature;
the determining module is further configured to determine a target calibrated range corresponding to the initial SOC of the battery at the charging start moment; and
the determining module is further configured to determine a charging map corresponding to the target calibrated range at the temperature of the battery at the charging start moment as the target charging map.

13. An electronic device, wherein the electronic device comprises a processor and a memory, the memory is coupled to the processor, the memory is configured to store a computer-readable instruction, and when the processor reads the computer-readable instruction from the memory, the electronic device is enabled to perform the method according to any one of claims 1 to 6.

14. A chip system, comprising at least one processor and at least one interface circuit, wherein the at least one interface circuit is configured to: perform a transceiver function, and send an instruction to the at least one processor; and when the at least one processor executes the instruction, the at least one processor performs the method according to any one of claims 1 to 6.

15. A computer-readable storage medium, wherein the computer-readable storage medium comprises a computer program, and when the computer program is run on an electronic device, the electronic device is enabled to perform the method according to any one of claims 1 to 6.

16. A computer program product, wherein when the computer program product runs on a computer, the computer is enabled to perform the method according to any one of claims 1 to 6.

17. A vehicle, wherein the vehicle comprises the battery charging apparatus according to any one of claims 7 to 12.
